# EUROPÄISCHE PATENTSCHRIFT

(11) **EP 0 498 285 B1**
(45) Veröffentlichungstag und Bekanntmachung des Hinweises auf die Patenterteilung: **17.05.1995**
(21) Anmeldenummer: 92101433.8
(22) Anmeldetag: 29.01.1992
(51) Int. Cl.: B23D 17/06, E02F 3/96, E04G 23/08

(54) **Anbauschere**
Demolition shears
Cisailles de démolition

(30) Priorität: 04.02.1991 CH 329/91
(43) Veröffentlichungstag der Anmeldung: 12.08.1992
(73) Patentinhaber: DRAGO ENGINEERING AG, 8810 Horgen (CH)
(72) Erfinder: Zepf, Hans-Rudolf, CH-8803 Rüschlikon (CH)
(74) Vertreter: Weiss, Peter, Dr. rer.nat.

(56) Entgegenhaltungen:
- EP-A- 0 347 371
- EP-A- 0 353 363
- FR-A- 2 211 962
- US-A- 4 955 961

## Beschreibung

Die Erfindung betrifft eine Anbauschere mit einem Scherenkörper gemäß Oberbegriff von Patentanspruch 1; siehe FR-A 22 11 962.

Derartige Anbauscheren werden insbesondere im Hoch- und Tiefbau benötigt. Meist sind sie an einem Arbeitsarm, insbesondere an einem Baggerarm angebracht und dienen dazu, Bau- und Industriematerialien, wie beispielsweise Stahlprofile, Betoneisen, Rohre, Leitungen oder auch Reifen zu zertrennen. Insbesondere werden Anbauscheren für den Abbruch von Stahlkonstruktionen, wie beispielsweise Masten für Leitungen oder ähnliches, benutzt.

Bauelemente in Form von Stahlkonstruktionen können entweder durch Brennen, d.h. mit entsprechenden Schweissvorrichtungen, oder durch rein mechamische Kräfte, wie beispielsweise mit entsprechenden Trennscheren abgebrochen werden. Der Vorteil solcher meist hydraulisch betätigter Scheren gegenüber Schweissbrennern ist der, dass sie einfach an entsprechenden Arbeitsarmen, beispielsweise Baggerarmen, befestigt, an deren Hydrauliksystem angeschlossen und von einem von dem eigentlichen Trennvorgang entfernten Arbeitsplatz aus bedient werden können. Dadurch wird das Abbrechen von Stahlkonstruktionen mit Trennscheren bedeutend schneller durchgeführt und ist weniger personal- und damit kostenintensiv, als das Abbrechen mit Schweissbrennern.

Diese genannten Trennscheren müssen allerdings, damit entsprechende Stahlelemente zertrennt werden können, grosse Kräfte übertragen. Aus diesem Grunde sind entsprechende Anforderungen an die Baugerätschaften zu stellen, an welche derartige Scheren angeschlossen werden.

Bekannte Anbauscheren sind als Zusatzgeräte zum Anbau an Bagger ausgebildet und weisen meist einen drehbar mit dem Baggerarm verbundenen ersten Scherenschenkel und einen an diesem schwenkbar befestigten zweiten Scherenschenkel auf. Dabei wird sowohl die Drehbewegung des ersten Scherenschenkels gegenüber dem Baggerarm, als auch die Schwenkbewegung des zweiten Scherenschenkels gegenüber dem ersten Scherenschenkel, welcher die eigentliche Scherbewegung durchführt, motorisch bewerkstelligt und zwar mit Hilfe von Antrieben, die zweckmässigerweise an die Kraftquelle des Baggers angeschlossen sind. Bei Scheren für Hydrobagger ist der Antrieb für die Drehbewegung ein hydraulischer Drehantrieb, der Antrieb für die Scherbewegung ein hydraulischer Linearantrieb. Beide Antriebe sind am Drucknetz des Baggers angeschlossen und werden vom Führerstand des Baggers aus betätigt und eingesetzt. Der Linearantrieb ist in den meisten Fällen im wesentlichen in Längsrichtung der Schere, also in der Verlängerung des Baggerarmes, angeordnet und ist dadurch mitbestimmend für die Baulänge der Schere und damit auch für die Grösse des Baggers, mit dem eine entsprechende Schere betätigt werden kann.

Es hat sich gezeigt, dass bestehende Scheren zu gross und schwer sind und oft nur mit Hilfe von Druckverstärkern betätigt werden können. Dementsprechend können sie dann auch nur an entsprechend grosse Bagger angebaut werden. Derartig grosse und schwere Ausrüstungen sind entsprechend schwerfällig, was auch ihre Manipulierbarkeit und Arbeitsgeschwindigkeit bestimmt.

Der vorliegenden Erfindung liegt die Aufgabe zugrunde, die Leistungsfähigkeit von Ausrüstungen zum Abbruch von Stahlkonstruktionen zu erhöhen und insbesondere eine Anbauschere zu schaffen, die kleiner, leichter und dadurch einfacher manipulierbar ist und mit kleinerem Hydraulikdruck eine vergleichbare Leistung erbringen kann.

Die Lösung dieser Aufgabe gelingt durch eine Anbauschere mit den Merkmalen nach Patentanspruch 1.

Die Verbesserung der Anbauschere gegenüber bestehenden Anbauscheren besteht einerseits darin, dass durch entsprechende Auslegung der Scherenhebel eine optimale Ausnutzung der Antriebskräfte erreicht wird, wobei der zu zertrennende Gegenstand, durch die Bewegung des Gegenstandes selbst und/oder durch Bewegung der Scherenhebel, vor dem eigentlichen Schneidvorgang möglichst unabhängig von seinen Abmessungen an eine für den Schneidvorgang geeignete Stelle der Scherenhebel bewegt wird. Ferner wird während des Schneidvorganges möglichst keine Kraft auf den Arbeitsarm übertragen, insbesondere keine Querkraft.

Durch die auch in den Unteransprüchen beschriebene symmetrische Bewegung beider Scherenhebel wird dafür gesorgt, dass die Schneidstelle immer auf der geradlinigen Verlängerung des Arbeitsarmes liegt und dass die Schneidkräfte immer symmetrisch zu dieser Verlängerung wirken. Dadurch werden Querkräfte auf den Arbeitsarm weitgehend verhindert, so dass dieser zur Aufnahme solcher Kräfte nicht speziell ausgebildet zu sein braucht.

Weitere Verbesserungen betreffen die Verbindung der beiden Scherenhebel und auch die Ausgestaltung des Antriebes. Hierzu wird auf die nachfolgende Figurenbeschreibung verwiesen.

Ferner ist die erfindungsgemässe Anbauschere gegenüber dem Arbeitsarm zwar nur unter Aufwendung einer minimalen Drehkraft, aber unbegrenzt um die Achse des Arbeitsarmes drehbar. Die Drehbewegung wird nicht aktiv durch einen Drehantrieb mit einer entsprechenden Steuerung bewirkt, weshalb die Schere wiederum kleiner und leichter gebaut sein kann.

Die Schere wird vor dem Trennvorgang grob in die für die Zertrennung notwendige Drehstellung gebracht, indem sie an einer beliebigen Fläche oder Gegenstand, z.B. an dem Abbruchobjekt, grob ausgerichtet wird. Vor dem eigentlichen Schneidvorgang richtet sie sich durch die Wirkung der Schneidkräfte automatisch exakt aus. Dadurch wird verhindert, dass zu irgend einem Zeitpunkt grosse Kräfte, insbesondere Torsionskräfte, auf den Arbeitsarm wirken.

Eine Anbauschere, deren Ausgestaltung den beschriebenen Prinzipien folgt, kann beispielsweise mit einem Bagger in der Grössenordnung von 3 t und einem Hydraulikaggregat für ca. 150 bis 250 bar betrieben werden und wird eine Schneidkraft in der Grössenordnung von 50 t erbringen können.

Weitere Vorteile, Merkmale und Einzelheiten der Erfindung ergeben sich aus der nachfolgenden Beschreibung bevorzugter Ausführungbeispiele sowie anhand der Zeichnung; diese zeigt in
Fig. 1 eine schematische Darstellung einer erfindungsgemässen Anbauschere und derjenigen Kräfte, die bei einem Schneidvorgang wirken;
Fig. 2 eine Draufsicht auf eine erfindungsgemässe Anbauschere in Öffnungslage;
Fig. 3 eine Draufsicht auf die Anbauschere gem. Fig. 2 in Schliesslage;
Fig. 4 eine Seitenansicht der Anbauschere gem. Fig. 2;
Fig. 5 eine Explosionsdarstellung eines Anschlussstückes für einen Scherenkörper an einen nicht näher gezeigten Arbeitsarm;
Fig. 6 eine teilweise aufgebrochen dargestellte Explosionsdarstellung eines Hydrauliksystems für einen Antrieb zum Betätigen der Anbauschere.

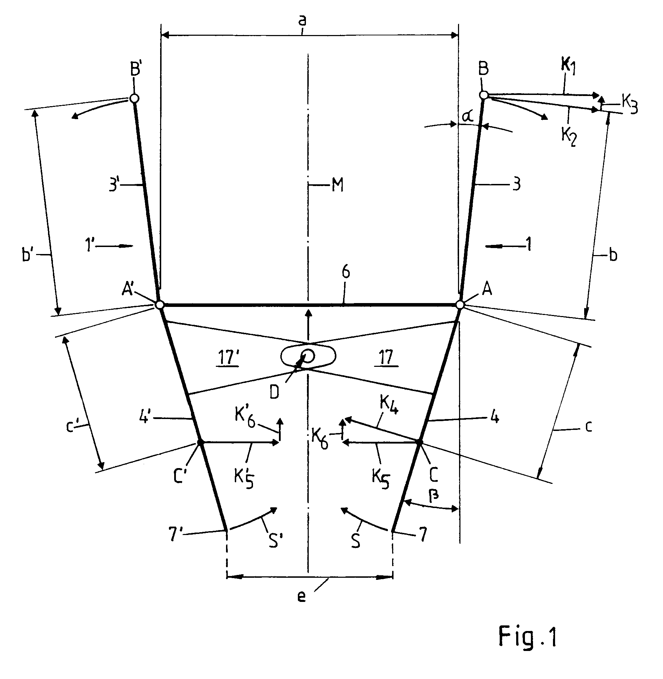

Eine erfindungsgemässe Anbauschere weist gemäss den Figuren 1 bis 3 zwei Scherenhebel 1 und 1' auf, welche mit einem Scherenkörper 2 über Schwenkachsen A und A' verbunden sind. Diese Schwenkachsen A und A' unterteilen jeden Scherenhebel 1 und 1' in Antriebsarm 3 und 3' sowie Scherarme 4 und 4'.

Die beiden Antriebsarme 3 und 3' sind an ihren freien Enden mit einem Antrieb 5 verbunden, der weiter unten näher beschrieben ist. Die Verbindung erfolgt über Drehgelenke B und B'.

Ferner sind die beiden Scherenhebel 1 und 1' nahe den Schwenkachsen A und A' und etwa in deren Mittelsenkrechten durch eine Einrichtung D zum Ausgleich von Scherkräften und zum Koordinieren und Synchronisieren der Bewegung der Scherhebel 1 und 1' miteinander verbunden. Auch diese Einrichtung wird weiter unten näher beschrieben.

In Fig. 1 ist die Anbauschere insbesondere zur Verdeutlichung der auf einen zu zertrennenden Gegenstand ausgeübten Kräfte schematisch dargestellt. Hierbei sind die Schwenkachsen A und A' zu erkennen, die einen Abstand a voneinander einhalten. Wenn die Antriebsarme 3 und 3' auseinander bewegt werden, so drehen die Scherenhebel 1 und 1' um die Schwenkachsen A und A', so dass die Scherarme 4 und 4' zueinander bewegt werden. Wie später noch zu beschreiben ist, greifen diese Scherarme 3 und 3' zumindest teilweise ineinander.

Bei diesem Drehen der Scherenhebel 1 und 1' führen die Scherarme 4 und 4' eine Schwenkbewegung in Richtung der Pfeile S und S' aus. Dabei sind die beiden Scherenhebel 1 und 1' mittels der Einrichtung D so koordiniert und synchronisiert, dass sich die Scherarme 4 und 4'symmetrisch zu einer Mittelsenkrechten M auf einer gedachten Verbindungslinie 6 zwischen den beiden Schwenkachsen A und A' bewegen. Durch diese Koordination der Schwenkbewegungen S und S' wird ein zu trennender Gegenstand, welcher beispielsweise nicht symmetrisch zu den Scherarmen 4 und 4' angeordnet ist, vor dem eigentlichen Schneidvorgang in eine, soweit es seine Form erlaubt, symmetrische Lage bewegt oder aber die Anbauschere bewegt sich in eine entsprechende Lage. Die bei einer derartigen Bewegung wirkenden Manipulationskräfte werden von der Einrichtung D aufgenommen und koordiniert. Die beim eigentlichen Schneidvorgang auftretenden Kräfte wirken auf die beiden Scherarme 4 und 4' durch diese vorherige Ausrichtung von dem zu trennenden Gegenstand und/oder der Schere im wesentlichen symmetrisch zur genannten Mittelsenkrechten M, wodurch Querkräfte auf die Einrichtung D und auf einen nicht näher gezeigten Arbeitsarm, an dem sich die Anbauschere befindet, vermieden werden.

In Fig. 1 sind im übrigen die wirkenden Kräfte für den Scherenhebel 1 vollständig, für den Scherenhebel 1' jedoch nur teilweise eingezeichnet. Dabei ist eine Antriebskraft K₁ vorgesehen, welche auf das Drehgelenk B und somit auf den Antriebsarm einwirkt. Bevorzugt wirkt diese Antriebkraft K₁ parallel zur Verbindungslinie 6 zwischen den Schwenkachsen A und A'. Die Antriebskraft K₁ lässt sich in zwei Komponenten K₂ und K₃ zerlegen, wobei K₂ senkrecht auf dem Antriebsarm 3 steht und K₃ parallel dazu wirkt. Die Komponente K₂ bewirkt in einem schematisch angedeuteten Schneidpunkt C des Scherarmes 4 eine Schneidkraft K₄, die senkrecht zum Scherarm 4 verläuft und deren Betrag gemäss Hebelgesetz vom dem Abstand b des Drehgelenks B von der Schwenkachse A und des Abstandes c der Schwenkachse A von dem Schneidpunkt C und vom Betrag der Antriebskraftskomponenten K ₂ abhängig ist.

Die Schneidkraft K₄ lässt sich wiederum zerlegen in zwei Komponenten K₅ und K₆, wobei K₅ in etwa parallel zur Verbindungslinie 6 der Schwenkachse A und A' und K₆ etwa senkrecht dazu wirkt.

Die Schwenkbewegung der Scherenhebel 1 und 1' bzw. der Scherarme 4 und 4' ist so begrenzt, dass ein Abstand e der freien Scherarmspitzen 7 bzw. 7' auch bei einer ganz offenen Anbauschere, wie in Fig. 1 dargestellt, kleiner ist als der Abstand a, der beiden Schwenkachsen A und A', so dass die Schneidkraftkomponente K₆ immer in Richtung zur Verbindungslinie 6 der Schwenkachsen A und A' bzw. zum Scherenkörper 2 hin gerichtet ist.

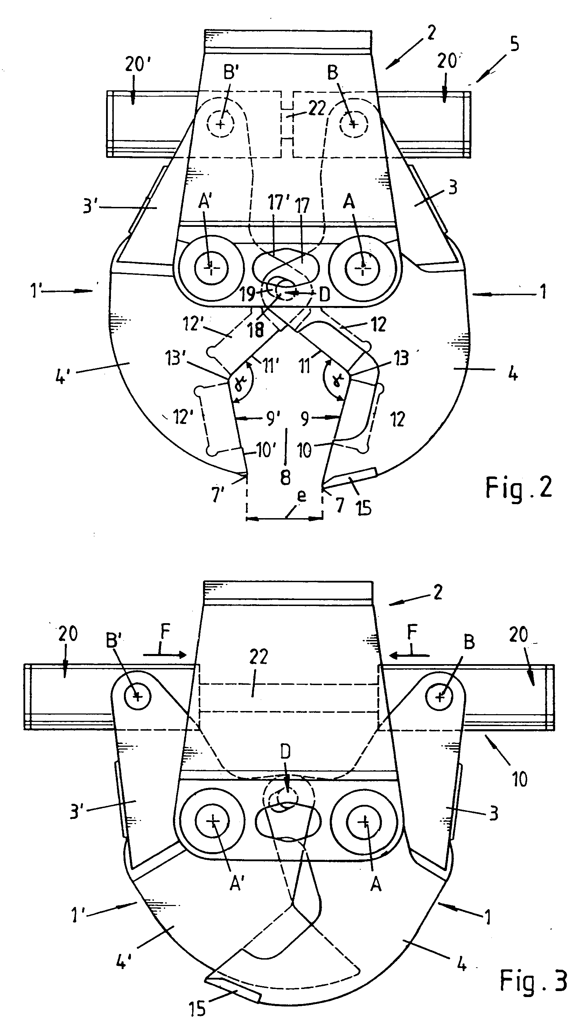

Ein zwischen den Scherarmen 4 und 4' positionierter Gegenstand, beispielsweise ein zu trennendes Stahlprofil, wird beim Schliessen der Anbauschere durch die Schneidkraftkomponenten K₆ und K₆' gegen den Scherenkörper 2 hin in das von den beiden Scherarmen 4 und 4' gebildete Scherenmaul 8 hineinbewegt, so lange keine entsprechenden äusseren Kräfte dieser Bewegung entgegenwirken und solange innerhalb des Scherenmauls 8 für eine derartige Bewegung genügend Raum vorhanden ist. Es ist vorteilhaft, durch entsprechende Ausgestaltung von Scherkanten 9 und 9' der Scherarme 4 und 4' (siehe Fig. 2 und 3) diese Bewegung des zu trennenden Gegenstandes zwischen den Scherarmen derart zu unterstützen und zu begrenzen, dass der Gegenstand weitgehend unabhängig von seinen Abmessungen und von seiner Form immer in einem bestimmten Bereich der Scherkanten 9 und 9' getrennt wird. Dadurch ist sichergestellt, dass die Schneidkräfte immer genügend gross sind, und dass die auf die Lager einwirkenden Kräfte ein tolerierbares Mass nicht überschreiten.

Die als Schneidkraft ausnutzbare Komponente K₂ der Antriebskraft K₁ nimmt beim Schliessen der Antriebsschere mit dem Cosinus des Winkels α ab. D.h., dass die Schneidkraft dann am grössten ist, wenn der Winkel α sehr klein ist (positiv oder negativ). Für eine gegen den Scherenkörper 2 wirkende Kraftkomponente K₆ (siehe oben) und einen möglichst kleinen Winkel α ist es vorteilhaft, die Scherenhebel derart auszulegen, dass der Winkel α kleiner ist als ein Winkel β, den der Scherarm 4 mit einer gedachten Parallele einschliesst, welche durch die Schwenkachse A geht. Dies ergibt für jede Lage des Schneidpunktes C die grössten Schneidkräfte auch bei relativ offener Schere, d.h. wenn relativ dicke Gegenstände zertrennt werden sollen.

Die Schneidkraft K₄ nimmt mit kleiner werdendem Abstand e zwischen Schneidpunkt C und Schwenkachse A zu. Wenn sich beim Schliessen der Schere die beiden freien Scherarmspitzen 7 und 7' getroffen haben, wandert der mögliche Schneidpunkt gegen die Verbindungslinie 6 der Schwenkachse A und A', so dass trotz grösser werdendem Winkel α und deshalb kleiner werdender Komponente K₂ die Schneidkraft K₄ eher zunimmt.

Die Scherkanten 9 und 9' sind im übrigen nicht geradlinig ausgestaltet, sondern bestehen aus zwei Schneidkantenabschnitten 10 und 11 bzw. 10' und 11', welche miteinander einen stumpfen Winkel γ bilden, wobei der an die freie Scherarmspitze 7 bzw. 7' anschliessende Schneidkantenabschnitt 10 bzw. 10' im wesentlichen in Richtung auf die Schwenkachse A bzw. A' zu verläuft. Daran schliesst sich dann der andere Schneidkantenabschnitt 10 bzw. 10' an, welcher wiederum eher in Richtung auf die gegenüberliegende Schwenkachse A bzw. A' des anderen Scherenhebels 1 bzw. 1' hin verläuft.

Beim Schliessen der Anbauschere treffen zuerst die Scherarmspitzen 7 und 7' aufeinander, wobei die Scherkanten 9 und 9' eine romboidförmige Öffnung bilden, die sich dann beim weiteren Schliessen der Anbauschere immer mehr verkleinert. Die abgewinkelte Form der Scherkanten 9 und 9' bewirkt, dass beim Schliessen der Anbauschere der zu trennende Gegenstand derart in die Anbauschere bewegt wird, dass der eigentliche Schneidvorgang dann an der hebelmässig günstigsten Stelle der Anbauschere stattfindet.

Die Scherkanten 9 und 9' sind vorteilhafterweise mit Scherklingen 12, 12' ausgerüstet, die beispielsweise an den Scherkanten 9 und 9' so angeordnet sind, dass ein Knie 13 bzw. 13', welches von den abgewinkelten Schneidkantenabschnitten 10 und 11 bzw. 10' und 11' gebildet wird, nicht mit einer Klinge belegt ist. Diese Variante ist vor allem dann gegenüber einer durchgehenden, abgewinkelten Scherklinge zu bevorzugen, wenn sehr dünne zu schneidende Gegenstände, die ausschliesslich im Knie 13 bzw. 13' geschnitten werden sollen, selten sind bzw. wenn der zu schneidende Gegenstand so materialschwach ausgebildet ist, dass er auch ohne eine spezielle Scherklinge geschnitten werden kann. Vom Erfindungsgedanken wird selbstverständlich auch eine durchgehende Scherklinge umfasst.

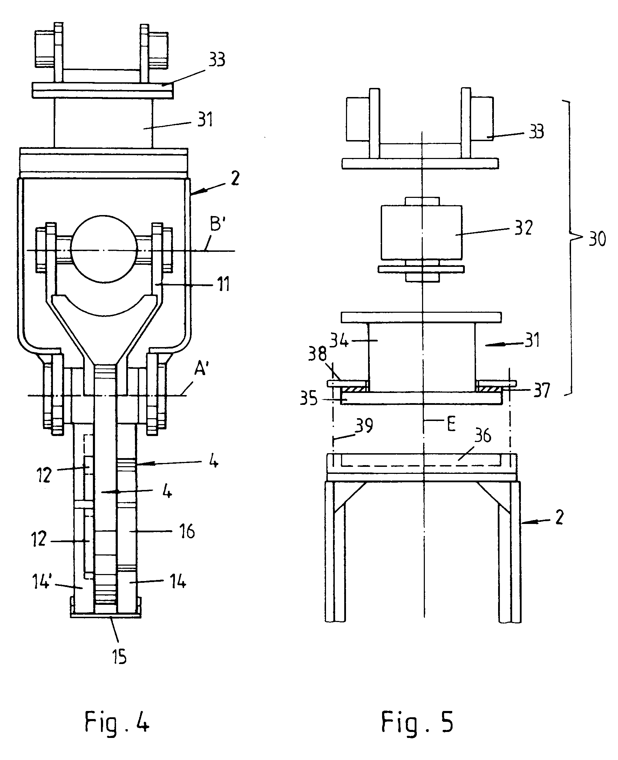

In Fig. 2 und 3 ist im übrigen ersichtlich, dass der Scherarm 4' kürzer ist als der Scherarm 4. Ferner geht aus Fig. 4 hervor, dass der Scherarm 4 aus zwei Wangen 14 und 14' besteht, welche miteinander durch eine Klammer 15 verbunden sind. Der Scherarm 4' kann bei seiner Schwenkbewegung zwischen die beiden Wangen 14 und 14' eingreifen und in diesen entlanggleiten.

Ferner ist erkennbar, dass nur eine Wange 14' Scherklingen 12 trägt, während an der anderen Wange 14 eine Aussparung 16 vorgesehen ist. Die Wange mit den Scherklingen 12 ist im vorliegenden Ausführungsbeispiel der eigentliche Schneidarm, während die Wange 14 mit der Aussparung 16 als Führungsarm dient.

Die oben angedeutete Einrichtung D zum Ausgleichen von Scherkräften und zum Koordinieren und Synchronisieren der Bewegung der Scherhebel 1 bzw. 1' besteht der Einfachheit halber aus zwei Flügeln 17 und 17', welche den Scherenhebel 1 bzw. 1' nahe den Schwenkachsen A bzw. A' angeformt sind. In Gebrauchslage überlappen sich die Flügel 17 und 17', wobei ein von einem Flügel 17' aufragender Bolzen 18 in ein Langloch 19 eingreift und in diesem geführt ist. Das Langloch 19 ist dabei so bemessen, dass die Öffnungsbewegung der Scherenhebel 1 und 1' begrenzt ist, damit in jedem Fall der Abstand e der Scherarmspitzen 7 und 7' kleiner bleibt, als der Abstand a zwischen den Schwenkachsen A und A'. Beim Schliessen des Scherenmauls 8 kann sich jedoch der Bolzen 18 in dem Langloch 19 bewegen, wodurch die Schliessbewegung nicht behindert, sondern im Gegenteil koordiniert und synchronisiert wird, auch wenn nur einer der Scherenhebel 1 bzw. 1' von dem weiter unten beschriebenen Antrieb betätigt würde. Auf diese Weise erfolgt immer eine synchrone und symmetrische Bewegung der Scherenhebel zu der oben beschriebenen Mittelsenkrechten auf der Verbindungslinie 6 zwischen Schwenkachse A und A'.

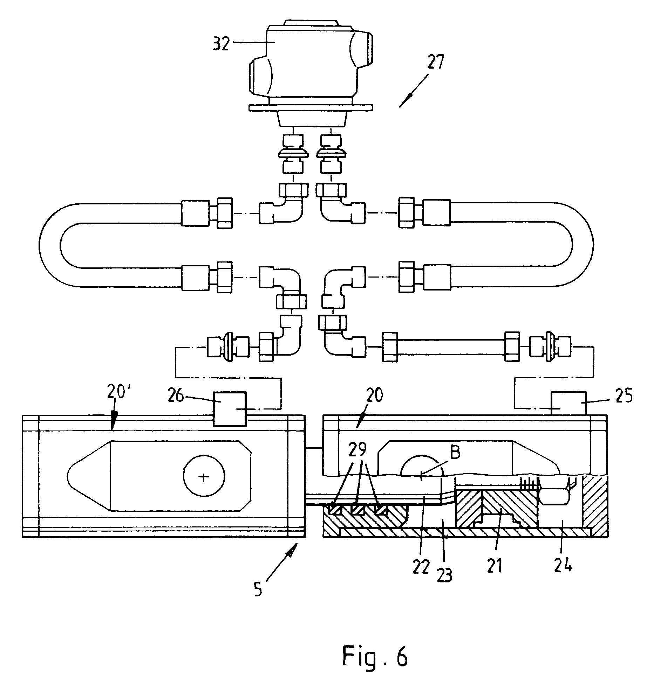

Ein Ausführungsbeispiel eines Antriebes 5 ist in Fig. 6 näher dargestellt. Die Antriebsarme 3 und 3' sind, wie oben erwähnt, über die Drehgelenke B und B' mit dem Antrieb 5 verbunden. Im vorliegenden Ausführungsbeispiel handelt es sich um einen hydraulischen Linearantrieb, der im Scherenkörper 2 frei beweglich angeordnet ist. Bevorzugt soll dieser Linearantrieb doppelt wirkend ausgebildet sein, d.h. dass er sowohl die Öffnungs- als auch Schliessbewegung der Anbauschere bewirkt. Selbstverständlich ist auch ein einseitig wirkender Antrieb denkbar, wobei dann allerdings gesonderte Mittel zum Öffnen der Schere vorgesehen sein müssen. Auch dieser Antrieb und weitere hydraulische, pneumatische oder elektromotorische Antrieb sollen vom vorliegenden Erfindungsgedanken umfasst sein.

Im vorliegenden Ausführungsbeispiel besteht der Antrieb 5 aus zwei Zylindern 20 und 20', wobei in jedem Zylinder ein Kolben 21 angeordnet ist und beide Kolben 21 durch eine Kolbenstange 22 miteinander verbunden sind. Der Kolben 21 bildet in jedem Zylinder 20 eine innere Druckkammer 23 und eine äussere Druckkammer 24.

In Schliesstellung der Anbauschere gemäss Fig. 3 befinden sich die Zylinder 20 und 20' in ihrer weitesten Entfernung voneinander, wobei diese Entfernung durch die Kolbenstange 22 überbrückt wird. Zum Öffnen der Anbauschere werden dann die inneren Druckkammern 23 mit einem Druckfluid gefüllt, so dass sie die Zylinder entlang der Kolbenstange 21 zueinander bewegen. Dies ist durch die Pfeile F in Fig. 3 angedeutet. Bei dieser Öffnungsbewegung könnten die Scherenhebel 1 bzw. 1' Kräfte von der Mittelsenkrechten M weg ausüben, was in vielen Fällen zum Zersprengen von Gegenständen ausgenützt werden kann. Beispielsweise ist es möglich, eine derartige Anbauschere in einen Hohlraum abzusenken und diesen Hohlraum aufzusprengen.

Für eine erneute Schliessbewegung der Anbauschere wird Druckfluid in die äusseren Druckkammern 24 gepresst, wobei entsprechend Druckfluid aus den inneren Druckkammern 23 abfliesst.

Für Zufuhr und Abfuhr des Druckfluids besitzt jeder Zylinder einen Anschluss 25 und 26 zu einem Hydrauliksystem 27, welches an eine später beschriebene Drehverbindung 31 anschliesst. Im vorliegenden Ausführungsbeispiel genügt ein Anschluss 25 für die äusseren Druckkammern und ein Anschluss 26 für die inneren Druckkammern 23, da die jeweiligen inneren und äusseren Druckkammern 23 bzw. 24 durch nicht näher gezeigte Bohrungen in der Kolbenstange 22 miteinander verbunden sind. Dadurch erfolgt ein Druckausgleich zwischen den einzelnen Kammern, wodurch ebenfalls eine koordinierte Bewegung der Zylinder 20 bzw. 20' erreicht werden kann. Selbstverständlich ist auch die Verbindung der einzelnen Druckkammern separat mit dem Hydrauliksystem 27 denkbar.

Der hier gezeigte Linearantrieb 5 mit Doppelkolben ist im Gegensatz zu einem entsprechenden Antrieb mit einfachem Kolben, wie er bislang als bekannt eingesetzt wird, in jeder Ausfahrposition symmetrisch zur gesamten Symmetrieachse der Anbauschere, d.h. zur Mittelsenkrechten M zu halten. Dies bedeutet, dass sich der Schwerpunkt der Anbauschere nicht von dieser Mittelsenkrechten wegbewegt und hierdurch keine seitlichen Querkräfte insbesondere auf ein weiter unten beschriebenes Anschlusstück 30 entstehen, mit dem die Anbauschere an einem nicht näher gezeigten Arbeitsarm befestigt ist. Ferner wirken auch keine Querkräfte auf den Arbeitsarm selbst, so dass sowohl das Anschlusstück als auch der Arbeitsarm in relativ leichter Bauweise ausgeführt sein können. Gleichzeitig wird durch die Symmetrie eine gute Manipulierbarkeit der Schere bewirkt.

Auch arbeitstechnisch wirkt sich die Anordnung der beiden Zylinder 20 und 20' günstig aus, da diese Zylinder im Vergleich zu einer herkömmlichen Kolben-Zylinder-Einheit pro Arbeitsgang nur den halben Weg macht, d.h. entsprechende Führungen bzw. Dichtungen 29 werden weniger beansprucht. Dies verlängert die Lebensdauer des Antriebs erheblich. Da die Kolbenstange 22 ferner mittig angeordnet ist, ist sie auch im ausgefahrenen Zustand der Zylinder 20 und 20' innerhalb des Scherenkörpers 2 gehalten und wird so vor Beschädigungen und Verschmutzung geschützt. Die Anordnung von Doppelkolben weist auch in Bezug auf Einströmverluste und seitliche Belastungen vorteilhafte Eigenschaften auf.

Die Drehgelenke B und B' werden im übrigen bevorzugt durch einfache Bolzen an den Zylindern 20 und 20' gebildet, welche in entsprechenden Drehlöchern in den Antriebsarmen 3 bzw. 3' drehen. Diese Anordnung ist raumsparend und robust, da die Zylinder 20 und 20' als Hohlkörper unter Druck eine robuste Bauart aufweisen und sich weitere, einem Verschleiss ausgesetzte Teile erübrigen. Insbesondere ist die Kolbenstange 22 beim Schliessen des Scherenmauls 8 nur auf Druck belastet, da zum Ausüben des Druckes die äusseren Druckkammern 24 mit Druckmedium gefüllt werden müssen.

Im übrigen kann der Antrieb 5 auch gleichzeitig die Begrenzung der Schwenkbewegung der Scherenhebel 1 und 1' bewirken, indem beispielsweise der Hub der Kolben 21 in den Zylinder 20 bzw. 20' begrenzt wird. Dies kann im Zusammenwirken mit der Einrichtung D oder aber unabhängig von dieser geschehen.

In den Figuren 4 und 5 ist im einzelnen ein Ausführungsbeispiel eines Anschlusstückes 30 gezeigt, über welches der Scherenkörper 2 mit dem Scherenhebel 1 und 1' an einem Arbeitsarm festgelegt wird. Es umfasst eine schwer drehbare Drehverbindung 31 und die o.g. Drehdurchführung 32, die eine Durchführung des Druckmediums in jeder beliebigen Drehstellung erlaubt. Ferner sollen auch beliebig viele Drehungen der Drehverbindung 31 um 360° möglich sein. Derartige Drehdurchführungen entsprechen dem Stand der Technik, so dass an dieser Stelle nicht näher darauf eingegangen werden soll.

Die Drehverbindung ist dann noch mit einer Aufhängung 33 verbunden, die letztendlich an den Arbeitsarm anschliesst.

Aufgabe der Drehverbindung 31 ist es, die Drehbewegung der Anbauschere gegenüber dem Arbeitsarm derart zu hemmen, dass die Anbauschere zwar in jeder Drehlage stabil ist, dass sie aber mit einem Minimum an Torsionsbelastungen des Hydraulikauslegers stufenlos gedreht werden kann. Die Drehverbindung ist vorteilhafterweise derart ausgebildet, dass eine stufenlose Drehung mit kleiner Torsionskraft möglich ist, da nur dann die Schere auch an einem kleinen Hydraulikausleger, der wesentlich empfindlicher gegen Torsionsbelastungen ist, montiert und betrieben werden kann. Für besondere Anwendung kann in der Drehverbindung 31 ein verstellbares Widerstandsmoment integriert sein, was dann eine universelle Einsatzmöglichkeit erlaubt.

Die Drehverbindung 31 weist eine Hülse 34 auf, welche die Drehdurchführung 32 aufnimmt. Zur Verbindung mit dem Scherenkörper 2 ist der Hülse 34 ein Flansch 35 angeformt, der in eine entsprechende Aussparung 36 in dem Scherenkörper 2 eingreift. Auf dem Flansch 35 liegt ein Gleitring 37 auf, welcher mit dem Flansch 35 beispielsweise durch Schrauben od.dgl. verbunden ist. Der Gleitring 37 besteht aus einem Material, das einen geringeren Reibungskoeffizienten aufweist als Stahl, vozugsweise aus Bronze.

Auf dem Gleitring liegt wiederum ein Klemmring 38 auf, der im vorliegenden Ausführungsbeispiel geteilt ausgebildet ist und der seitlich sowohl den Gleitring 37 als auch den Flansch 35 überragt. In diesem Bereich ist dann der Klemmring 38 durch nur strichpunktiert angedeutete Befestigungsmittel 39, beispielsweise Schrauben, fest mit dem Scherenkörper 2 verbunden. Seine Innenfläche gleitet aber auf dem Gleitring 37.

Soll bei Betrieb der Anbauschere diese um ihre Längsachse E rotieren, so dreht sich der Scherenkörper 2 zusammen mit dem Klemmring 38 auf dem Gleitring 37. Dabei ist der Gleitring 37 so dick ausgebildet, dass er auch nach dem Einsetzen des Flansches 35 in die Aussparung 36 über die obere Kante dieser Aussparung 36 hinaussteht, so dass bei einem Festlegen des Klemmringes 38 an dem Scherenkörper 2 eine klemmende Wirkung auf diesen Gleitring 37 ausgeübt wird. Hierdurch wird eine Drehung der Anbauschere gebremst und zwar durch eine gewollte und bestimmte Reibung der aneinander gleitenden Flächen des Gleitringes 37 und des Klemmringes 38.

Es versteht sich von selbst, dass dieser Gleitring 37 ein Verschleissteil der Drehverbindung 31 darstellt, der, sobald einer Drehung zu wenig Widerstand entgegengesetzt wird, entweder ausgewechselt oder zusätzlich unterlegt werden muss. Dies ist aber mit geringem Aufwand möglich.

Die zwischen Klemmring und Gleitring hergestellte Klemmung ist so ausgelegt, dass eine Drehung der Anbauschere am Arbeitsarm bei dessen Bewegung normalerweise nicht erfolgt. Erst wenn die Anbauschere mit einem Gegenstand, einer Oberfläche od.dgl. in Verbindung gebracht wird, richtet sie sich durch Drehung gegenüber diesem Gegenstand bzw. der Oberfläche aus, so dass die symmetrische Betätigung der Ambauschere erfolgen kann.

## Patentansprüche

1. Anbauschere mit einem Scherkörper (2), an dem zwei zweiarmige, als Antriebsarm (3,3') und als Scherarm (4,4') ausgebildete Scherenhebel (1,1') um je eine Schwenkachse (A,A') mit einem Abstand (a) zueinander drehbar angeordnet sind, wobei die Antriebsarme (3,3') an ihren Enden durch einen hydraulischen Linearantrieb (5) verbunden sind, **dadurch gekennzeichnet,** dass die Scherarme (4,4') einen winkelförmigen Scherkantenverlauf (9,9') aufweisen und daß zur dauernden Einhaltung eines kleineren Abstands (e) zwischen den Scherarmspitzen (7,7') als des Abstands (a) der Schwenkachsen (A,A') den Antriebsarmen (3,3') zur Begrenzung der Bewegung der Scherarme (4,4') Mittel zugeordnet sind, die in dem hydraulischen Linearantrieb (5) als Hubbegrenzung und/oder in einer Einrichtung (D) zur Synchronisierung der Bewegung der Scherenhebel (1,1') als Wegbegrenzung ausgebildet sind.

2. Anbauschere nach Anspruch 1, **dadurch gekennzeichnet,** dass die Einrichtung (D) aus je einem an den Antriebsarmen (3,3') angeordneten, sich gegenseitig überlappenden Flügel (17,17') und zur synchronen und symmetrischen Bewegung der Scherenhebel (1,1') zur Mittelsenkrechten (M) der Schere aus einem Langloch (19) in dem einen Flügel (17) und einem, in das Sangloch (19) ragenden, in dem anderen Flügel (17') befestigten Bolzen (18) besteht.

3. Anbauschere nach Anspruch 1 und 2, **dadurch gekennzeichnet**, dass der eine Scherarm (4) aus zwei Wangen (14,14') besteht, zwischen welche der andere Scherarm (7') einfährt, wobei an der einen Wange (14') Scherklingen (12) befestigt sind, während die andere Wange (14) eine Aussparung (16) aufweist.

4. Anbauschere nach Anspruch 1, **dadurch gekennzeichnet**, dass der Antrieb (5) ein doppelt wirkender hydraulischer Linearantrieb mit zwei, durch eine gemeinsame Kolbenstange (22) verbundenen Kolben (21) in je einem an den Antriebsarmen (3,3') angelenkten Zylinder (20,20') ist, wobei je eine innere Druckkammer (23,24) in den Zylindern (20,20) jeweils über Verbindungsleitungen in der Kolbenstange miteinander verbunden sind und je eine innere und eine äussere Druckkammer an ein Hydrauliksystem (27) angeschlossen ist.

5. Anbauschere nach Anspruch 1, **dadurch gekennzeichnet**, dass der Scherenkörper (2) an einem Arbeitsarm über ein Anschlussstück drehbar befestigt ist, welches eine Aufhängung (33), eine schwerdrehende Drehverbindung (31) mit konstantem oder verstellbarem Widerstandsmoment und eine Drehdurchführung (32) für die Durchführung eines Druckmediums aufweist.

6. Anbauschere nach Anspruch 5, **dadurch gekennzeichnet**, dass mit dem Scherenkörper (2) ein Klemmring (38) verbunden ist, welcher einen mit der Drehverbindung (31) verbundenen Gleitring (37) übergreift und auf diesem reibschlüssig aufliegt.

## Claims

1. Demolition shears with a shear body (2) on which two two-armed shear levers (1, 1') designed as a driving arm (3, 3') and as a shear arm (4, 4') are arranged rotatably round a respective pivot axis (A, A') with spacing (a) from one another, wherein the driving arms (3, 3') are connected at their ends by a hydraulic linear drive (5), characterised in that the shear arms (4, 4') have an angular shear edge course (9, 9') and in that for the permanent maintenance of smaller spacing (e) between the shear arm tips (7, 7') than the spacing (a) between the pivot axes (A, A'), the driving arms (3, 3') are allocated means to limit the movement of the shear arms (4, 4'), these means being designed as a stroke limit in the hydraulic linear drive (5) and/or as a path limit in a device (D) for synchronizing the movement of the shear levers (1, 1').

2. Demolitions shear according to Claim 1, characterised in that the device (D) consists of single respective mutually overlapping vanes (17, 17') arranged on the driving arms (3, 3') and, for the synchronous and symmetrical movement of the shear levers (1, 1') to the central vertical line (M) of the shears, of a slot (19) in one vane (17) and a bolt (18) which projects into the slot (19) and is fastened in the vane (17').

3. Demolition shears according to Claims 1 and 2, characterised in that one shear arm (4) consists of two cheeks (14, 14') between which the other shear arm (14') enters, shear blades (12) being fastened on one cheek (14') whereas the other cheek (14) has a recess (16).

4. Demolition shears according to Claim 1, characterised in that the drive (5) is a double-acting hydraulic linear drive with two pistons (21) connected by a common piston rod (22) in a respective cylinder (20, 20') articulated to the driving arms (3, 3'), wherein respective single internal pressure chambers (23, 24) in the cylinders (20, 20') are connected to one another in each case by connecting lines in the piston rod and respective internal and external pressure chambers are attached to the hydraulic system (27).

5. Demolition shears according to Claim 1, characterised in that the shear body (2) is rotatably fastened on a working arm by means of a connecting piece having a suspension means (33), a heavy-duty rotary connection (31) with a constant or adjustable momentum of resistance and a rotary bush (32) for the passage of a pressure medium.

6. Demolition shears according to Claim 5, characterised in that a clamping ring (38) which overlaps a sliding ring (37) connected to the rotary connection (31) and rests on it with frictional contact is connected to the shear body (2).

## Revendications

1. Cisaille de démolition comprenant un corps de cisaille (2) sur lequel sont disposés, rotatif l'un à l'autre autour de deux axes (A, A') distants de (a), deux leviers de cisaille (1, 1') en forme de bras, l'un en forme de bras d'entraînement (3, 3') et l'autre en forme de bras de coupe (4, 4'), un entraîneur hydraulique (5) à déplacement linéaire étant relié aux extrémités des bras d'entraînement (3, 3'), caractérisée en ce que les bras de coupe (4, 4') ont des bords tranchants (9, 9') dessinant un angle et que, pour maintenir en permanence, entre les pointes (7, 7') des bras de coupe (4, 4') une distance (e) inférieure à la distance (a) entre les axes (A, A') de pivotement des bras d'entraînement (3, 3'), ceci afin de limiter le mouvement des bras de coupe (4, 4'), il est prévu des moyens intervenant comme limiteurs de la course de l'entraîneur hydraulique linéaire (5) ou de celle d'un dispositif (D) assurant la synchronisation des mouvements des leviers de cisaille (1, 1').

2. Cisaille selon la revendication 1, caractérisée en ce que le dispositif (D) comporte deux ailes (17, 17') se recouvrant et appartenant chacune à un des bras d'entraînement (3, 3'), le déplacement synchrone et symétrique des leviers de cisaille (1, 1') par rapport au plan médian vertical (M) de la cisaille étant assuré par une boutonnière (19) portée par une aile (17) et une broche (18) dépassant de la boutonnière (19) et maintenue dans l'autre aile (17').

3. Cisaille selon la revendication 1 ou 2, caractérisée en ce qu'un bras de coupe (4) est constitué de deux joues (14, 14') entre lesquelles glisse l'autre bras de cisaille (4'), une joue (14') portant des lames de coupe (12) tandis que l'autre joue (14) présente une encoche (16).

4. Cisaille selon la revendication 1, caractérisée en ce que l'entraîneur (5) est du type linéaire à double action produite par deux pistons (21) relié à une tige de piston (22) commune et associés à des cylindres (20, 20') articulés chacun à un des bras d'entraînement (3, 3'), les chambres de pression (23, 24) situées à l'intérieur de chacun des cylindres (20, 20') étant reliées entre elles par des canalisations situées à l'intérieur de la tige de piston, chaque chambre interne et chaque chambre externe de pression étant reliée à un système hydraulique (27).

5. Cisaille selon la revendication 1, caractérisée en ce que le corps de cisaille (2) est fixé rotatif sur un bras de manoeuvre par l'intermédiaire d'un raccord comportant une suspension (33), une liaison rotative (31) à couple résistant constant ou réglable et un rotateur (32) commandé par un fluide sous pression.

6. Cisaille selon la revendication 5, caractérisée en ce que le corps de cisaille (2) est relié à une rondelle de serrage (38) elle-même en prise par dessus avec une bague de glissement (37) à laquelle elle est associée par frottement.
